# EUROPÄISCHE PATENTSCHRIFT

(11) **EP 1 593 488 B1**
(45) Veröffentlichungstag und Bekanntmachung des Hinweises auf die Patenterteilung: **11.06.2008**
(21) Anmeldenummer: 05006554.9
(22) Anmeldetag: 24.03.2005
(51) Int. Cl.: B32B 3/30, B32B 37/00, B60R 13/02

(54) **Laminatfolie und Verfahren zur ihrer Herstellung**
Laminate film and method of manufacturing same
Film laminé et procédé de sa fabrication

(30) Priorität: 06.04.2004 DE 102004016898
(43) Veröffentlichungstag der Anmeldung: 09.11.2005
(73) Patentinhaber: Bayer MaterialScience AG, 51368 Leverkusen (DE)
(72) Erfinder: Pophusen, Dirk, 51467 Bergisch Gladbach (DE)

(56) Entgegenhaltungen:
- EP-A- 0 320 925
- EP-A- 0 949 120
- EP-A- 0 992 558
- DE-A1- 4 007 878
- US-A- 5 750 234
- US-B1- 6 254 712
- DATABASE WPI Section Ch, Week 198917 Derwent Publications Ltd., London, GB; Class A23, AN 1989-126409 XP002344360 & JP 01 072832 A (MITSUBISHI GAS CHEM CO INC) 17. März 1989 (1989-03-17)
- DATABASE WPI Section Ch, Week 199435 Derwent Publications Ltd., London, GB; Class A89, AN 1994-283072 XP002344361 & JP 06 210968 A (DAINIPPON PRINTING CO LTD) 2. August 1994 (1994-08-02)

## Beschreibung

Die Erfindung betrifft eine Laminatfolie, ein Verfahren zur Herstellung dieser Laminatfolie, die eine sogenannte "Orangenhaut" aufweist, und ihre Verwendung.

Kunststoffe haben im Automobil heute eine hohe Bedeutung. Im Anwendungsbereich äußere Karosseriebauteile konkurieren Kunststoffe mit lackierten Metall- oder Kunststoffbauteilen. Um hier neue Anwendungen zu erschließen müssen Kunststoffbauteile neben lackierten Metall- oder Kunststoffbauteilen verbaut werden und sowohl hinsichtlich mechanischer Eigenschaften wie Kratzfestigkeiten und chemischer Beständigkeit auch optischen Ansprüchen genügen. Vor allem die bei lackierten Bauteilen oftmals bevorzugte sogenannte "Orangenhaut" oder "Orange Peel" muss dann auch bei Kunststoffbauteilen aufwendig nachgebildet werden.

Im Dachmodulbereich wird der Einsatz von Leichtbauwerkstoffen mit geringem Gewicht, hoher Steifigkeit und geringer Abschirmwirkung (guter Antennensignaldurchlässigkeit) gefordert. PU-(Polyurethan)-Hartschaumsysteme wie die sogenannten LFI- (LongFibreInjection) oder S-RIM-Systeme (Structural-ReactionInjectionMoulding oder auch Structural Resin Injection Moulding) haben hier hohe Vorteile gegenüber konkurierenden Systemen wie z.B. SMC (Sheet Moulding Compound). Die strukturierten Oberflächen von LFI oder S-RIM Bauteilen werden durch Folien realisiert. Diese Folien müssen darüber hinaus beim Hinterschäumen nach einer Vorverformung eine sehr gute Haftung z.B. zum PU-System aufweisen.

Das Verfahren der Folienhinterschäumung wird ausführlich von Haberstroh, Wirtz und Schlumm in der Zeitschrift FAPU, 21. Ausgabe (Nov./Dez. 2003), S. 66 bis S. 69 beschrieben.

Am fertigen Bauteil muss die Folie insbesondere die für Dachmodule geforderte hohe Wärmestandfestigkeit aufweisen. Hier haben sich vor allem polycarbonatbasierende Folien bewährt. Die zusätzliche Oberflächenfestigkeit und Chemikalienbeständigkeit wird über eine Deckschicht realisiert, die in einem Laminierverfahren auf die Trägerfolie aufgebracht wird. Die so erhaltenen Laminatfolien müssen dann in einem sich anschließenden Hinterschäum- oder Hinterspritzprozess nachträglich die gewünschte Karosserielack ähnliche Orangenhautstruktur erhalten. Diese Struktur wird durch die Oberflächenstruktur des Werkzeuges erzeugt.

In EP 0 320 925 B1 wird ein Herstellverfahren für Kunststoff-Formteile mit dekorativ geprägter Oberflächenbeschichtung beschrieben. Dazu wird eine ungeprägte, tiefziehfähige Folie in ein Werkzeug eingelegt, dass mindestens in Teilbereichen seiner Innenoberfläche eine Strukturierung aufweist, und anschließend hinterspritzt.

In DE 10 064 520 Al wird ein ähnliches Verfahren beschrieben, wobei hier zusätzlich Nanostrukturen (geprägte Strukturen im Größenbereich von Nanometern) erzeugt werden.

Aufgabe war es nun, eine wirtschaftlich kostengünstige und produktionssicher herstellbare Karosseriefolie bereitzustellen, die eine hohe Chemikalienbeständigkeit, hohe Kratzfestigkeit, gute Thermoverformbarkeit, sehr gute Haftung zum Trägermaterial und insbesondere eine lackähnliche Oberflächenstuktur ("Orangenhauteffekt") aufweist, sowie ein einfaches Verfahren zu ihrer Herstellung.

Diese Aufgabe konnte mit der erfindungsgemäßen Laminatfolie und durch das erfindungsgemäße Verfahren gelöst werden.

Gegenstand der Erfindung ist ein Verfahren zur Herstellung einer Laminatfolie mit einem DOI (Distinctness of Image) von 5 bis 60 (gemessen mit dem Messgerät "wave-scan DOI" der Fa. BYK Gardner GmbH, Geretsried, Deutschland) auf einer Seite, welches dadurch gekennzeichnet ist, dass
a) eine Trägerfolie oder ein Trägerfolienverbund mit einer Temperatur von 50 bis 150°C und mit einer Oberflächenrauhigkeit Rz von 1 bis 6 µm (gemäß DIN EN ISO 4288) auf mindestens einer Seite vorgelegt wird,
b) eine Deckfolie mit einer Temperatur von 80 bis 180°C bestehend aus einer Schutzschicht oder ein Deckfolienverbund mit einer Temperatur von 80 bis 180°C bestehend aus mindestens einer Farbschicht und einer Schutzschicht auf die Seite der Trägerfolie oder des Trägerfolienverbundes mit der Oberflächenrauhigkeit Rz von 1 bis 6 µm aufgebracht wird, sodass sich anschließend die Farbschicht im Falle der Verwendung des Deckfolienverbundes zwischen der Trägerfolie und der Schutzschicht befindet,
c) und der so hergestellte Verbund durch zwei gegenläufige Rollen geführt wird, wobei mindestens eine der Rollen eine Temperatur von 80 bis 180°C aufweist, und dabei zu einer Laminatfolie verpresst wird.

Die Oberflächenrauhigkeit Rz der Trägerfolie wird dadurch erzeugt, dass beim Herstellen der Trägerfolie im Extrusionsverfahren die Oberfläche der Folie nach Austritt aus der Extrusionsdüse über Rollenwalzen geprägt werden. Die Oberflächenstruktur(-prägung) der Rollenwalzen bestimmt die Oberflächenrauhigkeit Rz der Trägerfolie.

Durch das Auflaminieren der Deckfolie auf die Trägerfolie mit einer definierten Oberflächenrauhigkeit konnte überraschenderweise auf einfache Art die sogenannte Orangenhaut erzeugt werden, so dass die Optik des entsprechenden Bauteils der Optik eines lackierten Karosseriebauteiles entspricht.

Die Deckfolie bzw. der Deckfolienverbund weist vorzugsweise eine Dicke von 20 bis 250 µm, besonders bevorzugt 50 bis 200 µm auf.

Die erfindungsgemäß hergestellte Laminatfolie kann anschließend zur Herstellung eines Bauteiles (Formteiles) gegebenenfalls nach einer vorangegangenen Verformung in ein Werkzeug eingelegt, und mit Kunststoff hinterspritzt oder hinterschäumt werden. Dabei kann ein ganz normales Werkzeug eingesetzt werden, dessen Oberfläche nicht strukturiert sein muss.

Überraschenderweise wird die Oberflächenstruktur der Trägerfolie weder durch das Auflaminieren der Deckfolien bzw. des Deckfolienverbundes noch durch das sich anschließende Hinterspritzen in einem Werkzeug geschädigt.

Die Oberflächenrauhigkeit der Trägerfolie bzw. des Trägerfolienverbundes kann auch über den sogenannten R3z-Wert definiert werden. Hierbei handelt es sich um eine Werksnorm Daimler Benz DB N 31007 (1983). Die im erfindungsgemäßen Verfahren eingesetzten Trägerfolien bzw. Trägerfolienverbunde weisen vorzugsweise R3z-Werte von 10 µm bis 25 µm auf.

Für Folien mit mattierten oder strukturierten Oberflächen hat sich in der Praxis die Ermittlung der Oberflächenrauhigkeit nach der Werksnorm Daimler Benz, also des R3z-Wertes anstelle des Rz-Wertes bewährt und durchgesetzt.

Bevorzugt ist die Trägerfolie eine Polycarbonatfolie oder eine Blendfolie auf Basis von Polycarbonat und anderen Kunststoffen. Der Trägerfolienverbund besteht vorzugsweise aus einer Polycarbonatfolie und einer Blendfolie aus Polycarbonat und Acrylnltril-Butadien-Styrol.

Als Trägerfolien können beispielsweise Folien aus Polycarbonat (PC), Polymethylmethacrylat (PMMA), Acrylnitril-Butadien-Styrol (ABS), Styrolacrylnitril (SAN), Polybutylenterephthalat (PBT), Polyethylenterephthalat (PET), Polyamid (PA), Polyester, Acryl-Styrol-Acrylat (ASA) und deren Blends verwendet werden.

Als Trägerfolienverbunde können beispielsweise Folienverbunde aus den vorgenannten Folien verwendet werden.

Als Deckfolienverbund können z.B. Folien, wie sie in EP-A 949 120 beschrieben sind, verwendet werden. Diese Folien sind auf dem Markt unter dem Handelsnamen Fluorex® Paintfilm von der Fa. Soliant erhältlich.

Ein weiterer Gegenstand der Erfindung sind Laminatfolien mit einem DOI (Distinctness of Image) von 5 bis 60 auf mindestens einer Seite (gemessen gemäß "wave-scan DOI" der Fa. BYK Gardner) bestehend aus
A) einer Trägerfolie oder einem Trägerfolienverbund mit einer Oberflächenrauhigkeit Rz von 1 bis 6 µm (gemäß DIN EN ISO 4288) auf mindestens einer Seite und
B) einer Deckfolie bestehend aus einer Schutzschicht oder einem Deckfolienverbund bestehend aus mindestens einer Farbschicht und einer Schutzschicht, wobei sich die Deckfolie oder der Deckfolienverbund auf der Seite der Trägerfolie oder des Trägerfolienverbundes mit der Oberflächenrauhigkeit Rz von 1 bis 6 µm befindet und wobei die Farbschicht im Falle der Verwendung des Deckfolienverbundes zwischen Schutzschicht und Trägerfolie oder Trägerfolienverbund liegt.

Die erfindungsgemäß hergestellten Laminatfolien werden als Folien für Bauteile, insbesondere Karosserieteile und als kratzfeste Folien für Leichtbauformteile eingesetzt. Sie werden zur Herstellung von Formteilen, insbesondere Dachmodulen verwendet. Die Laminatfolien können beispielsweise im Thermoformverfahren verformt werden. Nach der Verformung können sie dann mit thermoplastischen Kunststoffen hinterspritzt werden. Sie können auch hinterschäumt oder auf dem Bauteil über eine Klebeschicht aufgebracht werden.

Der R3z-Wert beschreibt die Grundrauhtiefen nach Werksnorm Daimler Benz DB N 31007 (1983) und beschreibt den Mittelwert aus den Einzelrauhtiefen R3zi von fünf aufeinanderfolgenden Einzelmessstrecken. Die Einzelrauhtiefe R3zi ist der senkrechte Abstand der dritthöchsten Profilspitze vom dritttiefsten Profiltal des Rauheitsprofils innerhalb einer Einzelmessstrecke. Eine detaillierte Beschreibung ist in der Veröffentlichung der Fa. Mahr GmbH Ausgabe 1/09/99 mit dem Titel Perthometer Oberflächenmessgrößen enthalten.

Die Beschreibung der Oberflächenstrukturen von Lacken, den sogenannten "Orange Peel", erfolgt oft visuell. Der Orange Peel wird auf hochglänzenden Oberflächen als welliges Muster heller und dunkler Felder gesehen. Er wird z.B. durch den DOI bestimmt.

Der DOI (Distinctness of Image) wird als Messwert bei Lackoberflächen verwendet und liegt bei ideal glatten Flächen bei 100. Übliche Lacke liegen im Bereich von 10.

Eine detaillierte Beschreibung des DOI und des Messverfahrens ist in der Broschüre Qualitätskontrolle für Lacke und Kunststoffe 2003/2004 der Fa. BYK Gardner enthalten. Die Messung des DOI erfolgte über einen wave-scan DOI der Fa. BYK Gardner, Geretsried, Deutschland.

Die Rauhtiefe Rz ist der arithmetische Mittelwert der Einzelrauhtiefen Rzi aufeinanderfolgender Einzelmessstrecken. Die Einzelrauhtiefe Rzi ist die Summe der größten Profilspitze und der Tiefe des größten Profiltals des Rauheitsprofils innerhalb der Einzelmesstrecke. Die Rauhtiefe Rz wird gemäß DIN EN ISO 4288 ermittelt.

Die Erfindung soll anhand des nachfolgenden Beispiels näher erläutert werden.

### Beispiel

In einem Co-Extrusionsverfahren wurde eine zweischichtige Trägerfolie (Folienverbund) mit einer Gesamtdicke von 1000 µm hergestellt. Die untere Schicht bestand aus einem PC/ABS-Blend (Bayblend® T45 der Bayer MaterialScience AG) und hatte eine Dicke von 200 µm, die obere Schicht bestand aus PC (Makrolon® 3103 der Bayer MaterialScience AG) und hatte eine Dicke von 800 µm. Die aus der Düse austretende Schmelze wurde über ein Glättwerk abgekühlt und die Oberflächenrauhigkeit der PC-Schicht über die Verwendung von oberflächenstrukturierten Walzen eingestellt. Diese Trägerfolie wurde auf der strukturierten Polycarbonatseite anschließend in einem Laminierprozess mit einer Laminiergeschwindigkeit von 10 m/min. mit einer Deckfolie vom Typ Fluorex® ISF 2010 Paintfilm der Fa. Soliant laminiert. Diese eingesetzte Deckfolie bestand aus einem Primer mit einer Dicke von 20 µm, einer Farbschicht mit einer Dicke von 50 µm und einer Schutzschicht mit einer Dicke von 50 µm. Auf der Schutzschicht befand sich eine leicht abziehbare verformbare Schutzfolie. Die so hergestellte Laminatfolie hat eine Oberflächenstruktur, die optisch der Oberfläche eines lackierten Bauteils entspricht. Diese Laminatfolie wurde anschließend in einem Thermoformveifahren bei 190°C verformt und mit einem PUR-Integralhartschaum (Baydur® 0768 C/Desmodur® 44V 10 der Bayer MaterialScience AG) hinterschäumt und als Kraftfahrzeug-Dachmodulbauteil eingesetzt.

### Messergebnisse:

Trägerfolie:
   R-Wert der strukturierten Seite: 3 µm
   R3z-Wert der strukturierten Seite: 15 µm
   DOI nach BYK Gardner: Messung technisch nicht möglich, da der Glanz der Folie aufgrund der strukturierten Oberfläche für eine DOI Messung zu gering ist.
Laminatfolie:
   DOI nach BYK Gardner: 54,0 (gemessen mit dem Messgerät "wave-scan DOI" der Fa. BYK Gardner GmbH, Geretsried, Deutschland)

## Patentansprüche

1. Laminatfolie mit einem DOI (Distinctness of Image) von 5 bis 6,0 auf mindestens einer Seite (gemessen gemäß "wave-scan DOI" der Fa. BYK Gardner) bestehend aus
A) einer Trägerfolie oder einem Trägerfolienverbund mit einer Oberflächenrauhigkeit Rz von 1 bis 6 µm (gemäß DIN EN ISO 4288) auf mindestens einer Seite und
B) einer Deckfolie bestehend aus einer Schutzschicht oder einem Deckfolienverbund bestehend aus mindestens einer Farbschicht und einer Schutzschicht, wobei sich die Deckfolie oder der Deckfolienverbund auf der Seite der Trägerfolie oder des Trägerfolierlverbundes mit der Oberflächenrauhigkeit Rz von 1 bis 6 µm befindet und wobei die Farbschicht im Falle der, Verwendung des Deckfolienverbundes zwischen Schutzschicht und Trägerfolie oder Trägerfolienverbund liegt.

2. Verfahren zur Herstellung einer Laminatfolie mit einem DOI (Distinctness of Image) von 5 bis 60 (gemessen gemäß "wave-scan DOI" der Fa. BYK Gardner) auf mindestens einer Seite, **dadurch gekennzeichnet, dass**
a) eine Trägerfolie oder ein Trägerfolienverbund mit einer. Temperatur von 50 bis 150°C und einer Oberflächenrauhigkeit Rz von 1 bis 6 µm (gemessen gemäß DIN EN ISO 4288) auf mindestens einer Seite vorgelegt wird,
b) eine Deckfolie mit einer Temperatur von 80 bis 180°C bestehend aus einer Schutzschicht oder ein Deckfolienverbund mit einer Temperatur von 80 bis 180°C bestehend aus mindestens einer Farbschicht und einer Schutzschicht auf die Seite der Trägerfolie oder des Trägerfolienverbundes mit der Oberflächenrauhigkeit Rz von 1 bis 6 µm aufgebracht wird, sodass sich anschließend die Farbschicht im Falle der Verwendung des Deckfolienverbundes zwischen der Trägerfolie und der Schutzschicht befindet, und
c) der so hergestellte Verbund durch zwei gegenläufige Rollen geführt wird, wobei mindestens eine der Rollen eine Temperatur von 80 bis 180°C aufweist, und dabei zu einer Laminatfolie verpresst wird.

3. Verfahren gemäß Anspruch 2, **dadurch gekennzeichnet, dass** die Trägerfolie eine Polycarbonatfolie oder Polycarbonatblendfolie ist:

4. Verfahren gemäß Anspruch 2, **dadurch gekennzeichnet, dass** der Trägerfolienverbund aus einer Polycarbonatfolie und einer Polycarbonat-Acrymitril-Butadien-Styrol-Blendfolie besteht.

5. Verfahren gemäß Anspruch 2, **dadurch gekennzeichnet, dass** der Trägerfolienverbund über ein Laminierverfahren oder ein Coextrusionsverfahren hergestellt wird.

6. Verfahren gemäß Anspruch 2, **dadurch gekennzeichnet, dass** die Trägerfolie bzw. der Trägerfolienverbund aus einer Polycarbonatfolie bzw. aus einer Polycarbonatfolie und einer weiteren Kunststofffolie besteht, und die Polycarbonatfolie eine Oberflächenrauhigkeit Rz von 1 bis 6 µm aufweist.

7. Verwendung der Laminatfolie gemäß Anspruch 1 zur Herstellung von Formteilen, insbesondere Fahrzeug-Dachmodulen.

8. Verwendung der Laminatfolie gemäß Anspruch 1 als äußere Karosseriefolie von Karosseriebauteilen.

9. Verwendung der Laminatfolie gemäß Anspruch 1 als äußere Folie von einem Bauteil, wobei die Folie mit einem PUR hinterschäumt, einem thermoplastischen Werkstoff hinterspritzt oder auf dem Bauteil über eine Klebeschicht aufgebracht ist.

## Claims

1. Laminate sheet with a DOI (Distinctness of Image) of 5 to 60 on at least one side (measured according to wave-scan "DOI" of the BYK Gardner company), consisting of
A) a carrier film or a carrier film composite with a surface roughness Rz of 1 to 6 µm (according to DIN EN ISO 4288) on at least one side, and
B) a sealing film consisting of a protective layer or a sealing film composite consisting of at least one coloured layer and a protective layer, wherein the sealing film or the sealing film composite is located on the side of the carrier film or of the carrier film composite with a surface roughness Rz of 1 to 6 µm, and wherein in the case where a sealing film composite is used the coloured layer lies between the protective layer and carrier film or carrier film composite.

2. Process for the production of a laminate sheet with a DOI (Distinctness of Image) of 5 to 60 (measured according to "wave-scan DOI" of the BYK Gardner company) on at least one side, **characterised in that**
a) a carrier film or a carrier film composite at a temperature of 50° to 150°C and a surface roughness Rz of 1 to 6 µm (measured according to DIN EN ISO 4288) is placed on at least one side,
b) a sealing film at a temperature of 80° to 180°C consisting of a protective layer, or a sealing film composite at a temperature of 80° to 180°C consisting of at least one coloured layer and a protective layer, is applied to the side of the carrier film or of the carrier film composite with a surface roughness Rz of 1 to 6 µm, so that in the case where a sealing film composite is used the coloured layer is then situated between the carrier film and the protective layer, and
c) the composite thereby formed is passed through two counter-rotating rollers, wherein at least one of the rollers is at a temperature of 80° to 180°C, and is thereby compressed into a laminate sheet.

3. Process according to claim 2, **characterised in that** the carrier film is a polycarbonate film or polycarbonate blend film.

4. Process according to claim 2, **characterised in that** the carrier film composite consists of a polycarbonate film and a polycarbonate/acrylonitrile/butadiene/ styrene blend film.

5. Process according to claim 2, **characterised in that** the carrier film composite is produced by a laminating process or a co-extrusion process.

6. Process according to claim 2, **characterised in that** the carrier film or the carrier film composite consists of a polycarbonate film or of a polycarbonate film and a further plastics film, and the polycarbonate film has a surface roughness Rz of 1 to 6 µm.

7. Use of the laminate sheet produced according to claim 1, for the production of moulded parts, in particular vehicle roof modules.

8. Use of the laminate sheet produced according to claim 1, as outer car body sheet material of car body structural parts.

9. Use of the laminate sheet produced according to claim 1 as outer sheet of a structural part, in which the sheet is back-foamed with a PUR, back-injection moulded with a thermoplastic material, or is applied to the structural part using an adhesive layer.

## Revendications

1. Feuille stratifiée avec un DOI (Distinctness of Image) de 5 à 60 sur au moins un côté (mesuré selon "wave-scan DOI" de la société BYK Gardner) comprenant
a) une feuille support ou un assemblage de films supports avec une rugosité superficielle Rz 1 à 6 µm selon DIN EN ISO 4288 sur au moins un coté,
b) une feuille de recouvrement comprenant une couche de protection ou un assemblage de feuilles de recouvrement comprenant au moins une couche de couleur et une couche de protection, la feuille de recouvrement ou l'assemblage de feuilles de recouvrement se trouvant sur le côté de la feuille support ou de l'assemblage de feuilles supports avec la rugosité superficielle Rz 1 à 6 µm et la couche de couleur se situant dans le cas de l'utilisation de l'assemblage de feuilles de recouvrement entre la couche de protection et la feuille support ou l'assemblage de feuilles supports.

2. Procédé pour fabriquer une feuille stratifiée DOI (Distinctness of Image) de 5 à 60 (mesuré selon "wave-scan DOI" de la société BYK Gardner) sur au moins un côté, **caractérisé en ce que**
a) un film support ou un assemblage de feuilles supports avec une température de 50 à 150°C et une rugosité superficielle Rz 1 à 6 µm (mesurée selon DIN EN ISO 4288) est placé devant sur au moins un côté,
b) une feuille de recouvrement avec une température de 80 à 180°C comprenant une couche de protection ou un assemblage de feuilles de recouvrement avec une température de 80 à 180°C comprenant au moins une couche de couleur et une couche de protection est appliquée sur le côté de la feuille support ou de l'assemblage de feuilles supports avec la rugosité superficielle Rz de 1 à 6 µm, de sorte qu'ensuite la couche de couleur se trouve dans le cas de l'utilisation de l'assemblage de feuilles de recouvrement entre la feuille support et la couche de protection, et
c) l'assemblage ainsi fabriqué est guidé par deux galets de sens contraire, au moins l'un des galets présentant une température de 80 à 180°C, et est comprimé pour former une feuille stratifiée.

3. Procédé selon la revendication 2, **caractérisé en ce que** la feuille support est une feuille de polycarbonate ou une feuille de blende de polycarbonate.

4. Procédé selon la revendication 2, **caractérisé en ce que** l'assemblage de feuilles supports est constitué d'une feuille de polycarbonate et d'une feuille de blende de polycarbonate-acrylonitrile-butadiéne-styrène.

5. Procédé selon la revendication 2, **caractérisé en ce que** l'assemblage de feuilles supports est fabriqué par un procédé de stratification ou un procédé de coextrusion.

6. Procédé selon la revendication 2, **caractérisé en ce que** la feuille support ou l'assemblage de feuilles supports est constitué d'une feuille de polycarbonate ou d'une feuille de polycarbonate et d'une autre feuille en matière synthétique, et la feuille de polycarbonate présente une rugosité de surface Rz de 1 à 6 µm.

7. Utilisation de la feuille stratifiée selon la revendication 1 pour fabriquer des pièces moulées, en particulier des modules de toit de véhicules.

8. Utilisation de la feuille stratifiée selon la revendication 1 comme feuille de carrosserie extérieure de composants de carrosserie.

9. Utilisation de la feuille stratifiée selon la revendication i comme feuille extérieure d'un composant, la feuille étant moussée à l'arrière avec un polyuréthane, étant revêtue à l'arrière par projection avec un matériau thermoplastique ou étant appliquée sur le composant au moyen d'une couche de colle.
